# EUROPEAN PATENT SPECIFICATION

(11) **EP 3 343 141 B1**
(45) Date of publication and mention of the grant of the patent: **23.02.2022**
(21) Application number: 16840651.0
(22) Date of filing: 08.06.2016
(51) Int. Cl.: F25D 17/04, F25D 11/02

(54) **DEVICE HAVING MULTIPLE AIR FLOW PATHS AND REFRIGERATOR HAVING THE SAME**
VORRICHTUNG MIT MEHREREN LUFTSTRÖMUNGSWEGEN UND KÜHLMASCHINE DAMIT
DISPOSITIF COMPORTANT MULTIPLES CIRCUITS D'ÉCOULEMENT D'AIR ET RÉFRIGÉRATEUR MUNI DUDIT DISPOSITIF

(30) Priority: 28.08.2015 CN 201510543368
(43) Date of publication of application: 04.07.2018
(73) Proprietor: Qingdao Haier Joint Stock Co., Ltd, Qingdao, Shandong 266101 (CN)
(72) Inventor: FEI, Bin, Qingdao Shandong 266101 (CN); CHENG, Xueli, Qingdao Shandong 266101 (CN); WANG, Jing, Qingdao Shandong 266101 (CN); LIU, Zhuqing, Qingdao Shandong 266101 (CN)
(74) Representative: dompatent von Kreisler Selting Werner - Partnerschaft von Patent- und Rechtsanwälten mbB
(86) International application number: PCT/CN2016/085340
(87) International publication number: WO 2017/036222

(56) References cited:
- EP-A1- 2 789 937
- WO-A2-2009/069900
- CN-A- 1 155 062
- CN-A- 1 708 664
- CN-A- 104 390 333
- CN-A- 104 534 562
- CN-U- 204 404 472
- CN-U- 204 923 642
- CN-U- 205 002 482
- CN-U- 205 002 483
- CN-U- 205 002 484
- CN-U- 205 002 485
- CN-U- 205 002 486
- CN-U- 205 014 737
- CN-U- 205 014 738
- CN-U- 205 014 739
- CN-U- 205 119 611
- CN-U- 205 192 043
- DE-A1- 3 144 899
- DE-C2- 3 144 899
- JP-A- H06 180 175
- JP-A- 2001 280 800
- JP-U- S62 115 573
- KR-A- 20140 004 420
- US-A- 5 735 138

## Description

### TECHNICAL FIELD

The present invention relates to a refrigeration device, and more particularly, to a device having multiple air flow paths and a refrigerator having the same.

### BACKGROUND

In recent years, with the improvement of people's living standards and the enhancement of environmental consciousness, the requirements to the refrigerator are gradually transferred from the low-temperature refrigeration to the preservation performance of food. So the air-cooled refrigerator is favored gradually by people.

With respect to the air-cooled refrigerator, the preservation performance of food largely depends on air circulation in the storage compartments of the air-cooled refrigerator and the temperature difference between various parts inside the refrigerator. If the air circulation inside the refrigerator is reasonable, the smaller the temperature difference is, and the better the preservation performance of the refrigerator will be. Moreover, the key component to determine whether the air circulation inside the refrigerator is reasonable is an air passage, which controls the air direction and flow rate of the refrigerator and directly determines the refrigeration and preservation effects of the refrigerator.

Furthermore, in order to optimize the storage space, a single storage compartment is divided into a plurality of specific storage spaces via a shelf device such as a shelf or a drawer generally; and depending on the number of items stored in each storage space, the amounts of refrigeration air required by the storage spaces are also different. Thus, the refrigeration air directly entering the storage compartment without control from somewhere thereof will cause excessive cooling for part of storage spaces but lack of refrigeration air for others.

In the air passage design of the current air-cooled refrigerator on the market, a part of the air-cooled refrigerators outputs air from a freezing compartment and directly transfers the air to a refrigeration compartment. With respect to a common air-cooled refrigerator, there is no air door between the freezing compartment and the refrigeration compartment, and various air paths on the air passage are connected in series. When the temperature in the refrigeration compartment reaches a set temperature, cold air of the freezing compartment continues to flow into the refrigeration compartment. As a result, the temperature of the refrigeration compartment will be in a state of cyclical fluctuations. That is, the temperature inside the refrigeration compartment is always changing, thereby greatly affecting the preservation performance of the refrigerator.

In the air passage design of the current air-cooled refrigerator on the market, there is also a part of air-cooled refrigerators in which an evaporator is provided inside in a single accommodation compartment, the accommodation compartment of the evaporator is communicated with each storage compartment by using a complex air passage system, and refrigeration air generated by the evaporator is transferred to each storage compartment by using a fan. A control device (such as an electric air door) is provided in the air passage to control opening and closing of the air passage communicated with each storage compartment, or regulate the amount of air inside each storage compartment. But this structure is more complex, and inconvenient for unified control. In addition, it is also impossible to distribute and regulate the refrigeration air entering each storage compartment according to the requirement of each storage space to the refrigeration air supply amount. KR 2014 0004420 A discloses a device having multiple air flow paths according to the preamble of claim 1. DE 31 44 899 A1 and JP 2001 280 800 A disclose further devices.

### SUMMARY

An objective of the first aspect of the present invention is to overcome a defect of a conventional air-cooled refrigerator and to provide a device having multiple air flow paths for a refrigerator, so as to facilitate uniform regulation of the flow path and the flow rate of refrigeration air, and enable stable and accurate rotation of an adjustment member therein in a regulating process.

A further objective of the first aspect of the present invention is to reduce the influence of jittering of an output shaft of a motor on rotation of the adjustment member.

A yet further objective of the first aspect of the present invention is to reduce the thickness of the device having multiple air flow paths to save a space of the refrigerator.

An objective of the second aspect of the present invention is to provide a refrigerator having the device having multiple air flow paths.

According to the present invention, which is defined in claim 1, the present invention provides a device having multiple air flow paths, which comprises: a housing provided with at least one air inlet and a plurality of air outlets; an adjustment member having a rotation disk member and rotatably provided in the housing about an axis of the rotation disk member to completely shield, partially shield or completely expose each air outlet when being at different rotation positions, so as to regulate respective air discharging areas of the plurality of air outlets; a motor provided at a radially outer side of the rotation disk member; and a transmission mechanism configured to transfer a rotation motion outputted by the motor to the adjustment member at a reduced speed.

The housing comprises: a base whose circumferential edge consists of a first edge section and a second edge section, the first edge section being zin a shape of a circular arc coaxial with the rotation disk member; and a first circumferential wall section which extends from the first edge section of the base to one side of the base and in which the plurality of air outlets are formed. The adjustment member further comprises one or more shielding portions arranged in the circumferential direction of the rotation disk member at intervals, wherein each shielding portion extends out from one surface of the rotation disk member, and at least part of the outer surface of each shielding portion is arranged coaxially with the inner surface of the first circumferential wall section, such that the one or more shielding portions completely shield, partially shield or completely expose each air outlet when being at different rotation positions.

Optionally, the at least one air inlet refers to one air inlet, and two ends of the first circumferential wall section in the circumferential direction of the base define the air inlet; or the housing further comprises a second circumferential wall section that extends out from the second edge section of the base to the one side of the base, and the at least one air inlet is formed in the second circumferential wall section.

Optionally, the housing further comprises a distributor cover which covers one end, away from the base, of the first circumferential wall section.

The transmission mechanism is a gear transmission mechanism.

The transmission mechanism comprises: a gear mounted on an output shaft of the motor; and a gear ring engaged with the gear. The gear ring comprises an annular rib which extends out from the other surface of the rotation disk member and is coaxial with the rotation disk member, and a plurality of teeth which extend out from the outer circumferential surface of the annular rib and are arranged in the circumferential direction of the annular rib at intervals; or the gear ring is independent and is fixed to the other surface of the rotation disk member coaxially with the rotation disk member.

An annular groove is formed in the inner surface of the base, and the gear ring is mounted in the annular groove.

Optionally, the rotation disk member is ring-shaped; and the annular groove is a stepped groove configured to accommodate the rotation disk member.

Optionally, the rotation disk member is ring-shaped; the housing further comprises: a plurality of hooks which are uniformly distributed on the inner surface of the base in the circumferential direction of the base and are located in a center ring hole defined by the rotation disk member, and the rotation disk member and the gear ring are clamped between a hook portion of each hook and the bottom surface of the annular groove.

The housing further comprises a motor accommodating portion provided on the outer surface of the first circumferential wall section, wherein an accommodating cavity for accommodating the gear and the motor is defined in the motor accommodation portion.

Optionally, the number of the air outlets is three, which are sequentially arranged in the circumferential direction of the base at intervals; the number of the shielding portions is two, the two shielding portions being a first shielding portion and a second shielding portion respectively, wherein the first shielding portion is configured to completely shield one of the air outlets, the second shielding portion is configured to completely shield two of the air outlets, and a gap between the first shielding portion and the second shielding portion is configured to expose one of the air outlets.

According to the second aspect of the present invention, the present invention provides a refrigerator which comprises: an air passage assembly and any of the above-mentioned device having multiple air flow pathss. An air inlet passage and a plurality of air outlet passages are defined in the air passage assembly, wherein each air outlet passage is provided with one or more refrigeration air outlets, and the plurality of air outlet passages are configured to enable air flow flowing out of the air passage assembly to enter a plurality of storage compartments of the refrigerator respectively, or enable air flow flowing out of the air passage assembly to enter one storage compartment of the refrigerator respectively from a plurality of positions on a compartment wall of the storage compartment. The aforementioned device having multiple air flow paths is provided in the air passage assembly. At least one air inlet of the device having multiple air flow paths is communicated with the air inlet passage. The plurality of air outlets of the device having multiple air flow paths are communicated with the plurality of air outlet passages respectively.

Since each of the device having multiple air flow paths and the refrigerator of the present invention comprises a plurality of air outlets, the adjustment member can be rotated to shield the plurality of air outlets in a controllable manner, such that an air outlet passage can be selected and the amount of air from each air outlet passage can be regulated. Therefore, the reasonable distribution of refrigeration air can be performed according to the requirement of different storage compartments to the refrigeration air supply amount or the requirement to the to the refrigeration air supply amount at different positions of one storage compartment, and thus the preservation performance and operating efficiency of the refrigerator are enhanced.

Further, since each of the device having multiple air flow paths and the refrigerator of the present invention is provided with the motor and the transmission mechanism, a rotation motion outputted by the motor is transferred by the transmission mechanism to the adjustment member at a reduced speed, such that the influence of jittering of an output shaft of the motor on rotation of the adjustment member can be reduced. Therefore, accurate rotation of the adjustment member can be realized, and the adjustment member can be rotated to a predetermined position correctly to ensure that each air outlet can be accurately shielded or exposed. Furthermore, the transmission mechanism may also have deceleration and torque increase effects, and thus eliminate blocking when the motor rotates.

Further, since the motor in each of the device having multiple air flow paths and the refrigerator of the present invention is provided at the radially outer side of the rotation disk member, the overall thickness of the device having multiple air flow paths can be reduced. When the device having multiple air flow paths is mounted in the rear of the refrigerator, the thickness of the refrigerator can be reduced, such that the volume of the refrigerator can be reduced, or the effective storage space of the refrigerator is increased.

Further, in the device having multiple air flow paths and the refrigerator of the present invention, the operation of the adjustment member can be further stabilized due to the special mounting position of the gear ring of the transmission mechanism.

The above-mentioned and other objects, advantages and features of the present invention will become more apparent to those skilled in the art according to the following detailed description of specific embodiments of the present invention in conjunction with the accompanying drawings.

### BRIEF DESCRIPTION OF THE DRAWINGS

The followings will describe some embodiments of the present invention in detail in an exemplary rather than restrictive manner with reference to the accompanying drawings. The same reference signs in the drawings represent the same or similar components or parts. Those skilled in the art shall understand that these drawings may not be necessarily drawn according to the scales. In the drawings:
Fig. 1 is a schematic structure view of a device having multiple air flow paths according to an embodiment of the present invention;
Fig. 2 is a schematically exploded view of a device having multiple air flow paths according to an embodiment of the present invention;
Figs. 3 to 9 are schematically partial structure views respectively illustrating that an adjustment member in a device having multiple air flow paths is at different rotation positions according to embodiments of the present invention;
Fig. 10 is a schematic structure view of a refrigerator according to an embodiment of the present invention;
Fig. 11 is a schematic structure view in which a device having multiple air flow paths is mounted to an air passage assembly according to an embodiment of the present invention.

### DETAILED DESCRIPTION

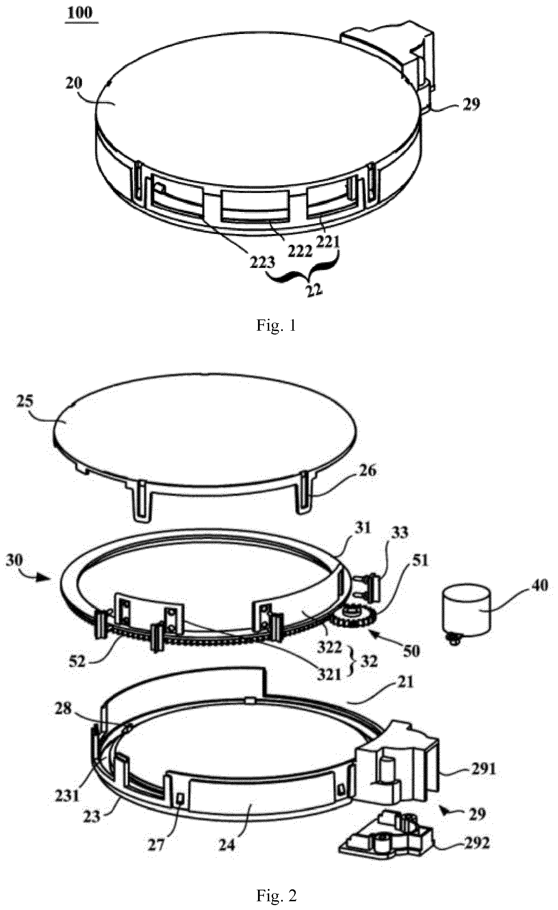

Fig. 1 is a schematic structure view of a device having multiple air flow paths 100 according to an embodiment of the present invention; Fig. 2 is a schematically exploded view of a device having multiple air flow paths 100 according to an embodiment of the present invention. As shown in Fig. 1 and Fig. 2, an embodiment of the present invention provides a device having multiple air flow paths 100. This device having multiple air flow paths 100 comprises a housing 20 and an adjustment member 30. The housing 20 is provided with at least one air inlet 21 and a plurality of air outlets 22, such that air flow can enter the housing 20 via the at least one air inlet 21, and then flow out of the housing 20 from the plurality of air outlets 22.

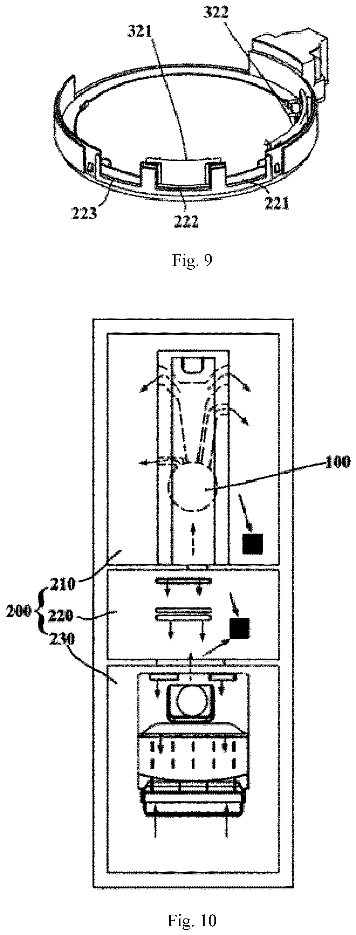

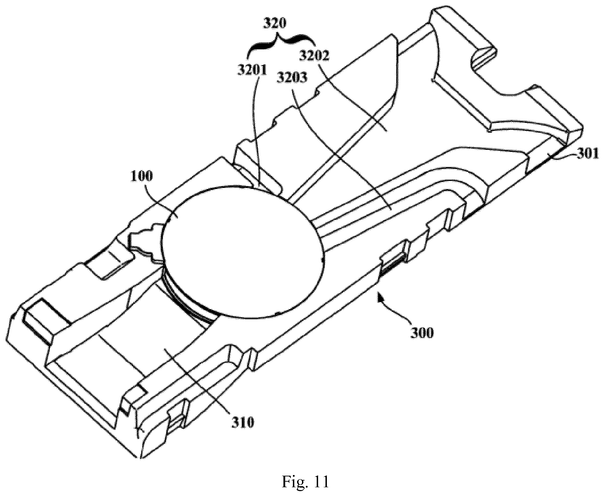

The adjustment member 30 is provided with a rotation disk member 31, and the adjustment member 30 is rotatably provided in the housing 20 about an axis of the rotation disk member 31 to completely shield, partially shield or completely expose each air outlet 22 when being at different rotation positions, so as to regulate respective air discharging areas of the plurality of air outlets 22. That is to say, the adjustment member 30 can be configured to rotate to different rotation positions about an axis of the rotation disk member 31 in a controlled manner to completely shield, partially shield or completely expose each air outlet 22, thereby regulating respective air discharging areas of the plurality of air outlets 22. The adjustment member 30 of the device having multiple air flow paths 100 in this embodiment of the present invention can distribute refrigeration air flowing from the air inlet 21 to the plurality of air outlets 22 in a controlled manner, control opening/closing of an air outlet passage 320 (see Fig. 11) communicated with each air outlet 22 and/or regulate the air amount in each air outlet passage 320, and further satisfy the requirement of different storage compartments 200 (refer to Fig. 10) to the refrigeration air supply amount, or the requirement to the refrigeration air supply amount at different positions in one storage compartment 200, or the requirement of different storage spaces in one storage compartment 200 to the refrigeration air supply amount.

According to the present invention, the device having multiple air flow paths 100 further comprises a motor 40 and a transmission mechanism 50. The motor 40 is provided at a radially outer side of the rotation disk member 31. The transmission mechanism 50 is configured to transfer a rotation motion outputted by the motor 40 to the adjustment member 30 at a reduced speed. In a design process, the inventor found that the rotation of the adjustment member 30 was not stable enough because of jittering of the motor 40. Therefore, the inventor proposed that the transmission mechanism 50 was used to reduce the influence of jittering of an output shaft of the motor 40, such that the adjustment member 30 can be rotated accurately. The deceleration and torque increase effects of the transmission mechanism 50 may also eliminate blocking of the motor 40. The overall thickness of the device having multiple air flow paths 100 can be reduced and the space is saved because the motor 40 is provided at a special position (i.e., the radially outer side of the rotation disk member 31), and therefore, the device having multiple air flow paths 100 is especially applicable to a refrigerator.

According to the present invention, the housing 20 comprises a base 23 and a first circumferential wall section 24. A circumferential edge of the base 23 consists of a first edge section and a second edge section, wherein the first edge section is in a shape of a circular arc coaxial with the rotation disk member 31. The first circumferential wall section 24 extends from the first edge section of the base 23 to one side of the base 23, and a plurality of air outlets 22 are formed in the first circumferential wall section 24. The first circumferential wall section 24 may extend at a predetermined angle with the surface of the base 23, preferably perpendicular to the surface of the base 23. The plurality of air outlets 22 are formed in the first circumferential wall section 24 in the circumferential direction of the base 23 at intervals. In some embodiments, the first circumferential wall section 24 may be a complete arc-shaped circumferential wall section provided with a plurality of air outlets 22, each of which may have an open edge. In other embodiments, the first circumferential wall section 24 may include at least three arc-shaped circumferential wall section portions, and gaps between every two of the arc-shaped circumferential wall section portions. The gap between every two of the arc-shaped circumferential wall section portions serves as one air outlet 22. During processing, only each of the arc-shaped circumferential wall section portions may be enabled to extend out from a plurality of positions of the first edge section of the base 23 to one side of the base 23.

In some further embodiments of the present invention, the housing 20 further comprises a distributor cover 25. The distributor cover 25 covers one end, away from the base 23, of the first peripheral wall section 24 to define an air passage space, i.e., an internal space of the housing 20, together with the base 23 and the first circumferential wall section 24. In order to facilitate the mounting of the distributor cover 25, the housing 20 may also comprise a plurality of clamping arms 26 extending from a plurality of positions on the edge of the distributor cover 25 to the base 23, respectively. A clamping groove or a bulge is formed on the inner surface of each connecting arm 26. A plurality of bulges 27 or clamping grooves correspondingly matched with the clamping grooves or the bulges are formed on the outer surface of the first circumferential wall section 24, such that the distributor cover 25 is clamped with the base 23.

In some embodiments of the present invention, at least one air inlet 21 refers to one air inlet 21 (or to say, the number of the air inlet 21 may be one), and two ends of the first circumferential wall section 24 in the circumferential direction of the base 23 define the air inlet 21. In some another embodiments, the housing 20 further comprises a second circumferential wall section that extends out from the second edge section of the base 23 to one side of the base 23, wherein the at least one air inlet 21 is formed in the second circumferential wall section. In some other embodiments, the housing 20 further comprises a second circumferential wall section that extends out from the second edge section of the base 23 to one side of the base 23. At least one air inlet 21 may be provided in the distributor cover 25. In the embodiments, the base 23 is circular as a whole, and the second edge section is in a shape of a circular arc coaxial with the rotation disk member 31. The device having multiple air flow paths 100 may also comprise an air supply device which is configured to enable the air flow to flow into the housing 20 from at least one air inlet 21 and to flow out of the housing 20 via one or more of the plurality of air outlets 22, and therefore the air supply efficiency is improved significantly. For example, the air supply device may be a centrifugal impeller which is provided in the housing 20.

According to the present invention, the adjustment member 30 further comprises one or more shielding portions 32 arranged in the circumferential direction of the rotation disk member 31 at intervals, wherein each shielding portion 32 extends out from one surface of the rotation disk member 31, and at least part of the outer surface of each shielding portion 32 is arranged coaxially with the inner surface of the first circumferential wall section 24, such that the one or more shielding portions 32 completely shield, partially shield or completely expose each air outlet 22 when being different rotation positions. For example, each shielding portion 32 may be an arc-shaped baffle plate which is configured to shield or expose each air outlet. Each of the arc-shaped baffle plates is preferably provided at the edge of the rotation disk member 31. When the rotation disk member 31 is rotated about the axis of the first circumferential wall section 24, the outer side surface of the arc-shaped baffle plate can always be attached to the inner side surface of the first circumferential wall section 24 in a sealing manner, so that the arc-shaped baffle plate can open or close one or more air outlets 22 in a controlled manner when being at different rotation positions.

In some embodiments of the present invention, in order to facilitate the rotation of the adjustment member 30, a distance between each of the shielding portions 32 and the first circumferential wall section 24 can be slightly increased; however, if the distance between each of the shielding portions 32 and the first circumferential wall section 24 is increased, cold air leakage will occur, resulting in an incomplete and useless shielding effect, i.e., air flow can flow to one air outlet 22 from another air outlet 22 via the gap between the first circumferential wall section 24 and each of the shielding portions 32. Therefore, the device having multiple air flow paths 100 in the embodiments of the present invention may further comprise a sealing device configured to at least partially prevent the air flow from flowing to each air outlet 22 via a gap between the outer surface of each shielding portion 32 and the inner surface of the first circumferential wall section 24. In particular, the sealing device may comprise at least two sealing gaskets 33, each of which extends in a direction parallel to the rotating axis of the adjustment member 30. A sealing gasket 33 is provided at each of the two ends of the arcuate outer surface of each shielding portion 32 along its rotating direction.

In particular, in some embodiments, the number of the air outlets 22 may be three, which are sequentially arranged in the circumferential direction of the base 23 at intervals. The three air outlets 22 include a first air outlet 221, a second air outlet 222 and a third air outlet 223 which can be sequentially arranged clockwise in the circumferential direction of the base 23 at intervals. The number of the shielding portions 32 may be two, and the two shielding portions 32 is a first shielding portion 321 and the second shielding portion 322 respectively and can be sequentially arranged anticlockwise in the circumferential direction of the rotation disk member 31 at intervals. The first shielding portion 321 can be configured to completely shield one of the air outlets 22. The second shielding portion 322 can be configured to completely shield two of the air outlets 22. A gap between the first shielding portion 321 and the second shielding portion 322 can be configured to expose one of the air outlets 22.

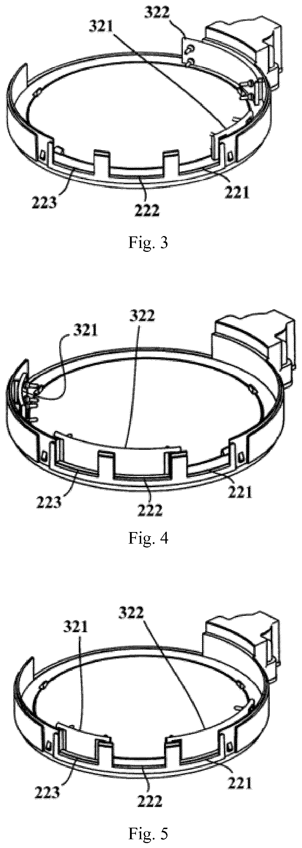

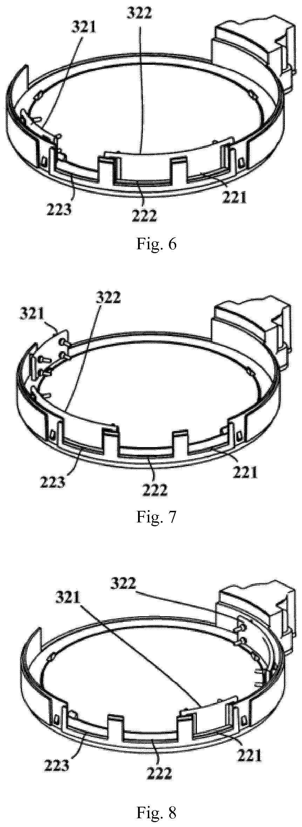

Figs. 3 to 9 are schematically partial structure views respectively illustrating that an adjustment member 30 in a device having multiple air flow paths 100 is at different rotation positions according to embodiments of the present invention. When the first shielding portion 321 and the second shielding portion 322 are rotated to positions as shown in Fig. 3, the first air outlet 221, the second air outlet 222 and the third air outlet 223 are in an open state respectively. When the first shielding portion 321 and the second shielding portion 322 are rotated to positions as shown in Fig. 4, the second shielding portion 322 completely shields the second air outlet 222 and the third air outlet 223, and the first air outlet 221 is in a completely exposed state. When the first shielding portion 321 and the second shielding portion 322 are rotated to positions as shown in Fig. 5, the first shielding portion 321 can completely shield the third air outlet 223, the second shielding portion 322 can completely shield the first air outlet 221, and the gap between the two shielding portions 32 can allow the second air outlet 222 to be completely exposed. When the first shielding portion 321 and the second shielding portion 322 are rotated to positions as shown in Fig. 6, the second shielding portion 322 can completely shield the first air outlet 221 and the second air outlet 222, and the gap between the two shielding portions 32 can allow the third air outlet 223 to be completely exposed.

When the first shielding portion 321 and the second shielding portion 322 are rotated to positions as shown in Fig. 7, the second shielding portion 322 may only completely shield the third air outlet 223, and the first air outlet 221 and the second air outlet 222 are in a completely exposed state respectively. When the first shielding portion 321 and the second shielding portion 322 are rotated to positions as shown in Fig. 8, the first shielding portion 321 may completely shield the first air outlet 221, and the second air outlet 222 and the third air outlet 223 are in a completely exposed state respectively. When the first shielding portion 321 and the second shielding portion 322 are rotated to positions as shown in Fig. 9, the first shielding portion 321 may completely shield the second air outlet 222, the third air outlet 223 is in a completely exposed state, and the gap between the two shielding portions 32 may allow the first air outlet 221 to be completely exposed. Of course, the first shielding portion 321 and the second shielding portion 322 may also be rotated to rotation positions where a half of the first air outlet 221 is shielded, and the second air outlet 222 and the third air outlet 223 are in a completely exposed state respectively, e.g., the first shielding portion 321 only shields a position, away from the second air outlet 222, at the half of the first air outlet 221. The first shielding portion 321 and the second shielding portion 322 may also be rotated to rotation positions where the first air outlet 221 is completely shielded, a half of the second air outlet 222 is shielded and the third air outlet 223 is in a completely exposed state, e.g., the second shielding portion 322 completely shields the first air outlet 221, and shields a position, away from the third air outlet 223, at the half of the second air outlet 222.

According to the present invention, the transmission mechanism 50 is a gear transmission mechanism 50. The gear 51 transmission mechanism 50 comprises a gear 51 and a gear ring 52 engaged with the gear 51. The gear 51 is mounted on an output shaft of the motor 40. The gear ring 52 is integrally formed with or independently of the rotation disk member 31, and fixed to the rotation disk member 31. The gear ring 52 comprises an annular rib which extends out from the other surface of the rotation disk member 31 and is coaxial with the rotation disk member 31, and a plurality of teeth which extend out from the outer circumferential surface of the annular rib and are arranged in the circumferential direction of the annular rib at intervals. Alternatively, the gear ring 52 is independent, and is fixed to the other surface of the rotation disk member 31 coaxially with the rotation disk member 31.

For ease of processing, the base 23 may be preferably circular as a whole, and the rotation disk member 31 may be a circular plate or an annular plate. An annular groove 231 is formed in the inner surface of the base 23. The gear ring 52 is mounted in the annular groove 231, such that the adjustment member 30 can be moved stably. Preferably, the rotation disk member 31 may be ring-shaped; and the annular groove 231 may be a stepped groove and also configured to accommodate the rotation disk member 31 to further ensure the movement stability of the adjustment member 30.

For the sake of preventing jittering of the adjustment member 30 in a rotation process, the housing 20 may further comprise a plurality of hooks 28 which are uniformly distributed on the inner surface of the base 23 in the circumferential direction of the base 23 and are located in a center ring hole defined by the rotation disk member 31. The rotation disk member 31 and the gear ring 52 are clamped between a hook portion of each hook 28 and the bottom surface of the annular groove 231.

For the sake of protecting the motor 40, the housing 20 further comprises a motor accommodation portion 29 provided on the outer surface of the first circumferential wall section 24, wherein an accommodation cavity for accommodating the gear 51 and the motor 40 is defined in the motor accommodation portion 29. The motor accommodation portion 29 may comprise a cavity portion 291 extending out from the outer surface of the first circumferential wall portion 24 and a cover plate portion 292 detachably mounted to the cavity portion 291.

Further, a distributor cover 25 may be mounted at the outer side of the surface, away from the base 23, of the gear 51 plate. According to the present invention, a plurality of teeth arranged in the circumferential direction of the rotation disk member 31 at intervals extends out from the outer circumferential surface of the rotation disk member 31 to form a gear ring integrated with the rotation disk member 31.

Fig. 10 is a schematic structure view of a refrigerator according to an embodiment of the present invention; Fig. 11 is a schematic structure view in which a device having multiple air flow paths 100 is mounted to an air passage assembly 300 according to an embodiment of the present invention. As shown in Fig. 10 and Fig. 11, the embodiment of the present invention further provides a refrigerator which is provided with one or more storage compartments 200. Each storage compartment 200 may also be divided into a plurality of storage spaces via a shelf plate or a shelf. Further, the refrigerator is also internally provided with an air passage assembly 300, and a device having multiple air flow paths 100 of any of the preceding embodiments, wherein the device having multiple air flow paths 100 is provided in the air passage assembly 300. An air inlet passage 310 and a plurality of air outlet passages 320 may be defined in the air passage assembly 300, each air outlet passage 320 having one or more refrigeration air outlets 301. The air inlet passage 310 may be communicated with a cooling compartment of the refrigerator to receive air flow cooled by a cooler in the cooling compartment. At least one air inlet 21 of the device having multiple air flow paths 100 is communicated with the air inlet passage 310, and a plurality of air outlets 22 of the device having multiple air flow paths 100 are communicated with the plurality of air outlet passages 320 respectively, such that air flow from the air inlet passage 310 enters the corresponding air outlet passage 320 in a controlled or distributable manner.

In some embodiments, the plurality of air outlet passages 320 are configured to enable air flow flowing out of the air passage assembly 300 to enter the plurality of storage compartments 200 of the refrigerator respectively. The device having multiple air flow paths 100 enables air flow from the air inlet passage 310 to enter the corresponding air outlet passage 320 in a controlled or distributable manner, and then enter the corresponding storage compartment 200. For example, the number of the air outlets 22 of the device having multiple air flow paths 100 may be three, such as a first air outlet 221, a second air outlet 222 and a third air outlet 223. The number of the air outlet passages 320 may be three. The plurality of storage compartments 200 may include a first storage compartment, a second storage compartment and a third storage compartment. When the first storage compartment needs refrigeration air, and the second storage compartment and the third storage compartment need no refrigerator air, the second air outlet 222 and the third air outlet 223 of the device having multiple air flow paths 100 are in a completely shielded state respectively, and the first air outlet 221 is in a completely exposed state. In particular, the refrigerator can control the rotation of the adjustment member 30 according to a temperature detected by a temperature sensor in the refrigerator to realize corresponding control, and therefore refrigeration air can be distributed to the plurality of storage compartments 200 reasonably, and thus the preservation performance and operating efficiency of the refrigerator are enhanced.

In other embodiments, as shown in Fig. 10, solid arrows in Fig. 10 indicate the flowing directions of air flow in one or more storage compartments 200, and dotted arrows indicate the flowing directions of air flow in the air passages. The plurality of air outlet passages 320 may be configured to enable the air flow flowing out of the air passage assembly 300 to enter one storage compartment 200 (e.g., the storage compartment 210) of the refrigerator from a plurality of positions on the compartment wall of the storage compartment 200. For example, the number of the air outlets 22 of the device having multiple air flow paths 100 may be three, such as a first air outlet 221, a second air outlet 222 and a third air outlet 223. The number of the air outlet passages 320 may be three, such as a first air passage 3201 communicated with the first air outlet 221, a second air passage 3202 communicated with the second air outlet 222 and a third air passage 3203 communicated with the third air passage 223. The second air passage 3202 may be provided with two or four refrigeration air outlets 301 which are symmetrically provided at the upper part of the rear wall of the storage compartment 200. The first air passage 3201 is located at one side of the second air passage 3202, provided with a refrigeration air outlet 301 and provided at the lower part of the rear wall of the storage compartment 200. The third air passage 3203 may be located at the other side of the second air passage 3202, provided with a refrigeration air outlet 301 and provided in the middle of the rear wall of the storage compartment 200. Further, the storage compartment 200 may be divided into three storage spaces via two shelves, each air outlet passage 320 being communicated with one storage space. In the embodiments, the plurality of storage compartments 200 may also include other storage compartments, such as a quick-freezing compartment 220 and a freezing compartment 230. The storage compartment 200 in each of the embodiments may also be referred to as a refrigeration compartment 210.

According to whether refrigeration air at each position of the storage compartment 200 of the refrigerator is sufficient or not, the refrigerator in this embodiment can control the refrigeration air to flow into this position from the corresponding air outlet passage 320, such that the refrigeration air can be distributed to different positions of the storage compartment 200 reasonably, and therefore the preservation performance and operating efficiency of the refrigerator are enhanced. The device having multiple air flow paths 100 can realize the regulation of the air direction and the air amount of the air outlet passage 320. Where the refrigeration air is needed in the storage room 200, the refrigeration air outlet 301 is opened there, and is then closed in case of no need for refrigeration air. Therefore, the constancy of the temperature inside the refrigerator is controlled, an optimal storage environment can be provided for food in the refrigerator, nutrition loss of food is reduced, power consumption of the refrigerator can be reduced and energy sources can be saved.

## Claims

1. A device having multiple air flow paths for a refrigerator, comprising:
a housing (20) provided with at least one air inlet (21) and a plurality of air outlets (22);
an adjustment member (30) having a rotation disk member (31) and rotatably provided in the housing about an axis of the rotation disk member (31) to completely shield, partially shield or completely expose each air outlet (22) when being at different rotation positions, so as to regulate respective air discharging areas of the plurality of air outlets (22);
a motor (40) provided at a radially outer side of the rotation disk member (31); and
a transmission mechanism (50) configured to transfer a rotation motion outputted by the motor (40) to the adjustment member (30) at a reduced speed,
wherein the transmission mechanism (50) comprises a gear (51) mounted on an output shaft of the motor (40) and a gear ring (52) engaged with the gear (51), a plurality of teeth extend out from an outer circumferential surface of the gear ring (52) and are arranged in a circumferential direction of the gear ring (52) at intervals, and the gear (51) is engaged with at least a portion of the plurality of teeth at the outer circumferential surface of the gear ring (52),
wherein
the housing (20) comprises a base (23) and a motor accommodation portion (29) provided on the outer surface of a circumferential wall of the housing (20),
the gear (51) and the motor (40) mounted with the gear (51) are accommodated in an accommodating cavity of the motor accommodation portion (29), and
an annular groove (231) is formed in the inner surface of the base (23), and the gear ring (52) is mounted in the annular groove (231); wherein
the housing (20) comprises:
a first circumferential wall section (24) which extends from the first edge section of the base to one side of the base and in which the plurality of air outlets are formed; and
the adjustment member (30) further comprises one or more shielding portions (32) arranged in the circumferential direction of the rotation disk member (31) at intervals, wherein each shielding portion (32) extends out from one surface of the rotation disk member (31), and at least part of the outer surface of each shielding portion (32) is arranged coaxially with the inner surface of the first circumferential wall section (24), such that the one or more shielding portions (32) completely shield, partially shield or completely expose each air outlet (22) when being at different rotation positions, wherein the gear ring (52) comprises an annular rib which extends out from the other surface of the rotation disk member (31) and is coaxial with the rotation disk member (31), and the plurality of teeth which extend out from the outer circumferential surface of the annular rib and are arranged in the circumferential direction of the annular rib at intervals or the gear ring (52) is independent and is fixed to the other surface of the rotation disk member (31) coaxially with the rotation disk member (31); wherein the base (23) comprises a circumferential edge consisting of a first edge section and a second edge section, the first edge section being in a shape of a circular arc coaxial with the rotation disk member;
**characterized in that** the housing (20) further comprises a motor accommodation portion (29) provided on the outer surface of a circumferential wall of the housing (20),the gear (51) and the motor (40) mounted with the gear (51) are accommodated in an accommodating cavity of the motor accommodation portion (29).

2. The device having multiple air flow paths according to claim 1, wherein
the at least one air inlet (21) refers to one air inlet (21), and two ends of the first circumferential wall section (24) in the circumferential direction of the base define the air inlet (21); or
the housing (20) further comprises a second circumferential wall section that extends out from the second edge section of the base (23) to the one side of the base (23), the at least one air inlet (21) being formed in the second circumferential wall section.

3. The device having multiple air flow paths according to claim 1, wherein
the housing (20) further comprises a distributor cover (25) which covers one end, away from the base (23), of the first circumferential wall section (24).

4. The device having multiple air flow paths according to claim 1, wherein
the rotation disk member (31) is ring-shaped; and
the annular groove (231) is a stepped groove configured to accommodate the rotation disk member (31).

5. The device having multiple air flow paths according to claim 1, wherein
the rotation disk member (31) is ring-shaped;
the housing (20) further comprises: a plurality of hooks (28) which are uniformly distributed on the inner surface of the base (23) in the circumferential direction of the base (23) and are located in a center ring hole defined by the rotation disk member (31), wherein the rotation disk member (31) and the gear ring (52) are clamped between a hook portion of each hook (28) and the bottom surface of the annular groove (231).

6. The device having multiple air flow paths according to claim 1, wherein
the number of the air outlets (22) is three, which are sequentially arranged in the circumferential direction of the base (23) at intervals;
the number of the shielding portions (23) is two, the two shielding portions (23) being a first shielding portion and a second shielding portion respectively, wherein
the first shielding portion is configured to completely shield one of the air outlets (22),
the second shielding portion is configured to completely shield two of the air outlets (22), and
a gap between the first shielding portion and the second shielding portion is configured to expose one of the air outlets (22).

7. A refrigerator, comprising:
an air passage assembly (300) in which an air inlet passage (310) and a plurality of air outlet passages (320) are defined, wherein each air outlet passage (320) is provided with one or more refrigeration air outlets (301), and the plurality of air outlet passages (320) are configured to enable air flow flowing out of the air passage assembly (300) to enter a plurality of storage compartments (200) of the refrigerator respectively, or enable air flow flowing out of the air passage assembly (300) to enter one storage compartment (200) of the refrigerator respectively from a plurality of positions on a compartment wall of the storage compartment (200); and
the device having multiple air flow paths (100) of any of claims 1 to 6, wherein the device having multiple air flow paths (100) is provided in the air passage assembly (300), at least one air inlet (21) of the device having multiple air flow paths (100) is communicated with the air inlet passage (310), and the plurality of air outlets (22) of the device having multiple air flow paths (100) are communicated with the plurality of air outlet passages (320) respectively.

## Patentansprüche

1. Vorrichtung mit mehreren Luftströmungswegen für eine Kühlmaschine, aufweisend:
ein Gehäuse (20), das mit mindestens einem Lufteinlass (21) und einer Vielzahl von Luftausgängen (22) versehen ist;
ein Einstellelement (30), das ein Drehscheibenelement (31) aufweist und in dem Gehäuse um eine Achse des Drehscheibenelements (31) drehbar vorgesehen ist, um jeden Luftauslass (22) vollständig abzuschirmen, teilweise abzuschirmen oder vollständig freizulegen, wenn es sich an unterschiedlichen Drehpositionen befindet, um jeweilige Luftabführregionen der Vielzahl von Luftauslässen (22) zu regeln;
einen Motor (40), der an einer radial äußeren Seite des Drehscheibenelements (31) vorgesehen ist; und
einen Übertragungsmechanismus (50), der derart ausgebildet ist, dass er eine von dem Motor (40) ausgegebene Drehbewegung mit verringerter Drehzahl zu dem Einstellelement (30) übermittelt,
wobei der Übertragungsmechanismus (50) ein Zahnrad (51), das an einer Abtriebswelle des Motors (40) angebaut ist, und einen Zahnkranz (52), der mit dem Zahnrad (51) zusammengreift, aufweist, sich eine Vielzahl von Zähnen von einer Außenumfangsfläche des Zahnkranzes (52) erstreckt und in Abständen in einer Umfangsrichtung des Zahnkranzes (52) angeordnet ist und das Zahnrad (51) zumindest mit einem Abschnitt der Vielzahl von Zähnen auf der Außenumfangsfläche des Zahnkranzes (52) zusammengreift,
wobei das Gehäuse (20) eine Basis (23) und einen Motoraufnahmeabschnitt (29), der auf der Außenfläche einer Umfangswand des Gehäuses (20) vorgesehen ist, aufweist,
das Zahnrad (51) und der Motor (40), der mit dem Zahnrad (51) zusammengebaut ist, in einem Aufnahmehohlraum des Motoraufnahmeabschnitts (29) aufgenommen sind, und
eine ringartige Nut (231) in der Innenfläche der Basis (23) ausgebildet ist und der Zahnkranz (52) in die ringartige Nut (231) eingebaut ist; wobei das Gehäuse (20) aufweist:
einen ersten Umfangswandbereich (24), der sich vom ersten Randbereich der Basis zu einer Seite der Basis erstreckt und in dem die Vielzahl von Luftauslässen ausgebildet ist; und
das Einstellelement (30) ferner einen oder mehrere Abschirmabschnitte (32) aufweist, die in Abständen in der Umfangsrichtung des Drehscheibenelements (31) angeordnet sind, wobei sich jeder Abschirmabschnitt (32) von einer Fläche des Drehscheibenelements (31) nach außen erstreckt und zumindest ein Teil der Außenfläche jedes Abschirmbereichs (32) koaxial mit der Innenfläche des ersten Umfangswandbereiches (24) angeordnet ist, so dass der eine oder die mehreren Abschirmabschnitte (32) jeden Luftauslass (22) vollständig abschirmen, teilweise abschirmen oder vollständig freilegen, wenn sie sich an unterschiedlichen Drehpositionen befinden, wobei der Zahnkranz (52) eine ringartige Rippe aufweist, die sich von der anderen Fläche des Drehscheibenelements (31) nach außen erstreckt und mit dem Drehscheibenelement (31) koaxial ist, und die Vielzahl von Zähnen, die sich von der Außenumfangsfläche der ringartigen Rippe nach außen erstrecken und in Abständen in der Umfangsrichtung der ringartigen Rippe angeordnet sind, oder der Zahnkranz (52) unabhängig ist und an der anderen Fläche des Drehscheibenelements (31) koaxial mit dem Drehscheibenelement (31) befestigt ist; wobei die Basis (23) einen Umfangsrand aufweist, der aus einem ersten Randbereich und einem zweiten Randbereich besteht, wobei der erste Randbereich die Form Kreisbogens hat, der koaxial mit dem Drehscheibenelement ist;
**dadurch gekennzeichnet, dass**
das Gehäuse (20) ferner einen Motoraufnahmeabschnitt (29) aufweist, der auf der Außenfläche einer Umfangswand des Gehäuses (20) vorgesehen ist, das Zahnrad (51) und der Motor (40), der mit dem Zahnrad (51) zusammengebaut ist, in einem Aufnahmehohlraum des Motoraufnahmeabschnitts (29) aufgenommen sind.

2. Vorrichtung mit mehrere Luftströmungswegen nach Anspruch 1, bei der
sich der mindestens eine Lufteinlass (21) auf einen Lufteinlass (21) bezieht und zwei Enden des ersten Umfangswandbereichs (24) in der Umfangsrichtung der Basis den Lufteinlass (21) definieren; oder
das Gehäuse (20) ferner einen zweiten Umfangswandbereich aufweist, der sich vom zweiten Randbereich der Basis (23) zu der einen Seite der Basis (23) nach außen erstreckt, wobei der mindestens eine Lufteinlass (21) im zweiten Umfangswandbereich ausgebildet ist.

3. Vorrichtung mit mehreren Luftströmungswegen nach Anspruch 1, bei der
das Gehäuse (20) ferner eine Verteilerabdeckung (25) aufweist, die ein von der Basis (23) abgewandtes Ende des ersten Umfangswandabschnitts (24) abdeckt.

4. Vorrichtung mit mehreren Luftströmungswegen nach Anspruch 1, bei der
das Drehscheibenelement (31) ringförmig ist; und
die ringartige Nut (231) eine gestufte Nut ist, die derart ausgebildet ist, dass sie das Drehscheibenelement (31) aufnimmt.

5. Vorrichtung mit mehreren Luftströmungswegen nach Anspruch 1, bei der
das Drehscheibenelement (31) ringförmig ist;
das Gehäuse (20) ferner aufweist: eine Vielzahl von Haken (28), die in der Umfangsrichtung der Basis (23) gleichmäßig auf der Innenfläche der Basis (23) verteilt sind und sich in einem mittleren Ringloch befinden, das von dem Drehscheibenelement (31) definiert wird, wobei das Drehscheibenelement (31) und der Zahnkranz (52) zwischen einem Hakenabschnitt jedes Hakens (28) und der unteren Fläche der ringartigen Nut (231) festgeklemmt sind.

6. Vorrichtung mit mehreren Luftströmungswegen nach Anspruch 1, bei der
die Anzahl der Luftauslässe (22) drei ist, die in Abständen sequenziell in der Umfangsrichtung der Basis (23) angeordnet sind;
die Anzahl der Abschirmabschnitte (32) zwei ist, wobei die zwei Abschirmabschnitte (32) ein erster Abschirmabschnitt beziehungsweise ein zweiter Abschirmabschnitt sind, wobei
der erste Abschirmabschnitt derart ausgebildet ist, dass er einen der Luftauslässe (22) vollständig abschirmt,
der zweite Abschirmabschnitt derart ausgebildet ist, dass er zwei der Luftauslässe (22) vollständig abschirmt, und
ein Spalt zwischen dem ersten Abschirmabschnitt und dem zweiten Abschirmabschnitt derart ausgebildet ist, dass er einen der Luftauslässe (22) freilegt.

7. Kühlmaschine, die aufweist:
eine Luftdurchgangsanordnung (300), in der ein Lufteinlassdurchgang (310) und eine Vielzahl von Luftauslassdurchgängen (320) definiert sind, wobei jeder Luftauslassdurchgang (320) mit einem oder mehreren Kühlluftauslässen (301) versehen ist und die Vielzahl von Luftauslassdurchgängen (320) derart ausgebildet ist, dass sie erlaubt, dass eine Luftströmung, die aus der Luftdurchgangsanordnung (300) ausströmt, jeweils in eine Vielzahl von Aufbewahrungsfächern (200) der Kühlmaschine eintritt, oder erlaubt, dass eine Luftströmung, die aus der Luftdurchgangsanordnung (300) ausströmt, jeweils von einer Vielzahl von Positionen an einer Fachwand des Aufbewahrungsfachs (200) aus in die Luftdurchgangsanordnung (300) eintritt; und
die Vorrichtung mit mehreren Luftströmungswegen (100) nach einem der Ansprüche 1 bis 6, wobei die Vorrichtung mit mehreren Luftströmungswegen (100) in der Luftdurchgangsanordnung (300) vorgesehen ist, wobei mindestens ein Lufteinlass (21) der Vorrichtung mit mehreren Luftströmungswegen (100) mit dem Lufteinlassdurchgang (310) kommuniziert und die Vielzahl von Luftauslässen (22) der Vorrichtung mit mehreren Luftströmungswegen (100) jeweils mit der Vielzahl von Luftauslassdurchgängen (320) kommuniziert.

## Revendications

1. Dispositif comportant de multiples veines d'air pour un réfrigérateur, comprenant :
un logement (20) pourvu d'au moins une entrée d'air (21) et une pluralité de sorties d'air (22) ;
un organe d'ajustement (30) comportant un organe de disque de rotation (31) et ménagé à rotation dans le logement autour d'un axe de l'organe de disque de rotation (31) pour complètement blinder, partiellement blinder ou complètement exposer chaque sortie d'air (22) lorsqu'il est à différentes positions de rotation, de manière à réguler des superficies d'évacuation d'air respectives de la pluralité de sorties d'air (22) ;
un moteur (40) ménagé au niveau d'un côté radialement externe de l'organe de disque de rotation (31) ; et
un mécanisme de transmission (50) configuré pour transférer un mouvement de rotation produit par le moteur (40) à l'organe d'ajustement (30) à une vitesse réduite,
dans lequel le mécanisme de transmission (50) comprend un engrenage (51) monté sur un arbre de sortie du moteur (40) et une couronne (52) en prise avec l'engrenage (51), une pluralité de dents prolongent une surface circonférentielle externe de la couronne (52) et sont agencées dans une direction circonférentielle de la couronne (52) à intervalles, et l'engrenage (51) est en prise avec au moins une portion de la pluralité de dents au niveau de la surface circonférentielle externe de la couronne (52),
dans lequel le logement (20) comprend une base (23) et une portion d'accueil de moteur (29) ménagée sur la surface externe d'une paroi circonférentielle du logement (20),
l'engrenage (51) et le moteur (40) équipé de l'engrenage (51) sont accueillis dans une cavité d'accueil de la portion d'accueil de moteur (29), et
une rainure annulaire (231) est formée dans la surface interne de la base (23), et la couronne (52) est montée dans la rainure annulaire (231) ; dans lequel
le logement (20) comprend :
une première section de paroi circonférentielle (24) qui prolonge la première section de bord de la base vers un côté de la base et dans laquelle la pluralité de sorties d'air sont formées ; et
l'organe d'ajustement (30) comprend en outre une ou plusieurs portions de blindage (32) agencées dans une direction circonférentielle de l'organe de disque de rotation (31) à intervalles, dans lequel chaque portion de blindage (32) prolonge une surface de l'organe de disque de rotation (31), et au moins une partie de la surface externe de chaque portion de blindage (32) est agencée coaxialement avec la surface interne de la première section de paroi circonférentielle (24), de telle sorte que les une ou plusieurs portions de blindage (32) blindent complètement, blindent partiellement ou exposent complètement chaque sortie d'air (22) lorsqu'elle est à différentes positions de rotation, dans lequel la couronne (52) comprend une nervure annulaire qui prolonge l'autre surface de l'organe de disque de rotation (31) et est coaxiale avec l'organe de disque de rotation (31), et la pluralité de dents qui prolongent la surface circonférentielle externe de la nervure annulaire et sont agencées dans la direction circonférentielle de la nervure annulaire à intervalles ou bien la couronne (52) est indépendante et est fixée à l'autre surface de l'organe de disque de rotation (31) coaxialement avec l'organe de disque de rotation (31) ; dans lequel la base (23) comprend un bord circonférentiel consistant en une première section de bord et une seconde section de bord, la première section de bord étant sous la forme d'un arc circulaire coaxial avec l'organe de disque de rotation ;
**caractérisé en ce que** le logement (20) comprend en outre une portion d'accueil de moteur (29) ménagée sur la surface externe d'une paroi circonférentielle du logement (20), l'engrenage (51) et le moteur (40) équipé de l'engrenage (51) sont accueillis dans une cavité d'accueil de la portion d'accueil du moteur (29).

2. Dispositif comportant de multiples veines d'air selon la revendication 1, dans lequel
l'au moins une entrée d'air (21) se réfère à une entrée d'air (21), et deux extrémités de la première section de paroi circonférentielle (24) dans la direction circonférentielle de la base définissent l'entrée d'air (21) ; ou
le logement (20) comprend en outre une seconde section de paroi circonférentielle qui prolonge la seconde section de bord de la base (23) vers le côté de la base (23), l'au moins une entrée d'air (21) étant formée dans la seconde section de paroi circonférentielle.

3. Dispositif comportant de multiples veines d'air selon la revendication 1, dans lequel
le logement (20) comprend en outre un couvercle de distributeur (25) qui couvre une extrémité, à distance de la base (23), de la première section de paroi circonférentielle (24).

4. Dispositif comportant de multiples veines d'air selon la revendication 1, dans lequel
l'organe de disque de rotation (31) est en forme de bague ; et
la rainure annulaire (231) est une rainure à étages configurée pour accueillir l'organe de disque de rotation (31).

5. Dispositif comportant de multiples veines d'air selon la revendication 1, dans lequel
l'organe de disque de rotation (31) est en forme de bague ;
le logement (20) comprend en outre : une pluralité de crochets (28) qui sont répartis uniformément sur la surface interne de la base (23) dans la direction circonférentielle de la base (23) et sont situés dans un trou de bague central défini par l'organe de disque de rotation (31), dans lequel l'organe de disque de rotation (31) et la couronne (52) sont serrés entre une portion de crochet de chaque crochet (28) et la surface de fond de la rainure annulaire (231).

6. Dispositif comportant de multiples veines d'air selon la revendication 1, dans lequel
le nombre des sorties d'air (22) est de trois, qui sont agencées séquentiellement dans la direction circonférentielle de la base (23) à intervalles ;
le nombre de portions de blindage (23) est de deux, les deux portions de blindage (23) étant une première portion de blindage et une seconde portion de blindage respectivement, dans lequel
la première portion de blindage est configurée pour blinder complètement l'une des sorties d'air (22),
la seconde portion de blindage est configurée pour blinder complètement deux des sorties d'air (22), et
un écartement entre la première portion de blindage et la seconde portion de blindage est configuré pour exposer une des sorties d'air (22).

7. Réfrigérateur, comprenant :
un ensemble passage d'air (300) dans lequel un passage d'entrée d'air (310) et une pluralité de passages de sortie d'air (320) sont définis, dans lequel chaque passage de sortie d'air (320) est pourvu d'une ou plusieurs sorties d'air de réfrigération (301), et la pluralité de passages de sortie d'air (320) sont configurés pour permettre à une veine d'air sortant de l'ensemble passage d'air (300) d'entrer dans une pluralité de compartiments de stockage (200) du réfrigérateur respectivement, ou permettent à une veine d'air sortant de l'ensemble passage d'air (300) d'entrer dans un compartiment de stockage (200) du réfrigérateur respectivement depuis une pluralité de positions sur une paroi de compartiment du compartiment de stockage (200) ; et
le dispositif comportant de multiples veines d'air (100) selon l'une quelconque des revendications 1 à 6, dans lequel le dispositif comportant de multiples veines d'air (100) est ménagé dans l'ensemble passage d'air (300), au moins une entrée d'air (21) du dispositif comportant de multiples veines d'air (100) est en communication avec le passage d'entrée d'air (310), et la pluralité de sorties d'air (22) du dispositif comportant de multiples veines d'air (100) sont en communication avec la pluralité de passages de sortie d'air (320) respectivement.
